# EUROPEAN PATENT APPLICATION

(11) **EP 3 284 580 A1**
(43) Date of publication of application: **21.02.2018**
(21) Application number: 16779661.4
(22) Date of filing: 14.04.2016
(51) Int. Cl.: B29C 53/08, B29C 43/36

(54) **METHOD FOR SHAPING TUBES AND EQUIPMENT FOR CARRYING OUT SAID METHOD**

(30) Priority: 14.04.2015 ES 201530499
(71) Applicant: Gómez Nápoles, Xabier, 08303 Mataró, Barcelona (ES); Cairó Garcia, Francesc, 08911 Badalona, Barcelona (ES)
(72) Inventor: GOMEZ CASANOVA, Xavier, 08319 Dosrius Barcelona (ES); GOMEZ NAPOLES, Xabier, 08303 Mataro Barcelona (ES); CAIRO GARCIA, FRANCESC, 08911 Badalona Barcelona (ES)
(74) Representative: Espiell Volart, Eduardo Maria
(86) International application number: PCT/ES2016/070262
(87) International publication number: WO 2016/166399

(57) **Abstract**

The invention relates to a method for shaping tubes and to equipment for carrying out said method, comprising: positioning the section of tube (2) to be curved such that it is pressed between two half-moulds (3, 4) having respective curved surfaces (5, 5') complementary to the shape to be obtained; applying heat in order to melt the material and soften and deform same until it takes on the new shape, by applying ultrasound waves at the same time as the insertion of the tube between the half-moulds (3, 4), by means of at least one sonotrode (7) connected to an ultrasound generator (8) which heats the curved surface (5) of said first half-mould (3), combining values of frequency and time according to the type of plastic material, the diameter of the tube (2) and the thickness of the walls of same; and cooling the material once the deformation time has elapsed.

## Description

### OBJECT OF THE INVENTION

The invention, as stated in the title of this specification, refers to a method for tube shaping and the equipment to carry it out, showing a series of advantages and characteristics of novelty, that will be explained in details thereafter, that means a significant improvement in the current state-of-the-art.

The object of this invention is focussed, concretely, in a method for shaping tubes and pipes of plastic material and its derivatives that is based, in a novel manner, in using ultrasounds to curve the said tubes, concretely by applying ultrasonic waves by means of an equipment generating the said waves and one or more sonotrodes conveniently incorporated in each of the areas expected to be curved, achieving that the method is simpler and, specially, much less expensive than the systems currently known and used for the same purpose.

### FIELD OF APPLICATION OF THE INVENTION

The field of application of this invention is within the sector of the industry engaged in producing and transforming plastic materials, namely for tube shaping.

### BACKGROUND OF THE INVENTION

As it is well-known, in the industry many applications exist in which it is necessary to handle tubes or pipes of plastic material in order to curve and shape them so that they take a given shape, because these tubes are normally produced out of a straight length obtained by extrusion.

To this end, until not too long ago and still at present, either very obsolete systems were used with high costs to be amortized because of the large facilities they occupy and high consumptions, in which handling the tubes is carried out in a very artisanal manner or a shaping chamber is used based on halogen lights that are applying heat on each of the areas to be curved, making the shaping has to be carried out piece by piece and therefore with a rather long shaping time or, tables with hot air are used in which the tubes have to be mounted by hand and be heated, applying them air on one side, then on the other, and afterwards cold air on one side and then on the other, constituting therefore a very tiresome work and during a long time.

The most advanced up to date is a shaping system based on machines that operate by emission of high frequency electrical current, that rare faster shaping tubes, around 30 seconds per piece, but with the drawback that they are very expensive machines because of the type of generator and tools they use, and therefore it results very difficult to amortize them if it is not dealt with large series to be produced.

Broadly speaking, the said system comprises two half moulds having the shape of the curve to be shaped, between which the length of tube to be curved is incorporated, one of the said half moulds being connected to a high power generator the half mould being constituted as the electrode acting on the material to heat it and soften it making it takes the shape expected when it is maintained between the said half moulds until it cools down.

However these machines, in addition to have a very high cost, that can currently easily reach worth 90,000€, have also the drawback that they emit a type of radiation harmful for health and that can reach a radius of up to 300mm, therefore the part of shaping has to be insulated.

The objective of this invention therefore is to develop a new method for shaping tubes of plastic and derivatives that prevents such drawbacks and therefore is carried out in a simpler and cheaper manner, so that it is easily amortized and it allows shaping short series of pieces, and it has to be pointed out that, at least the applicant does not know there exists any other method or invention similar showing it same technical characteristics and constitution, as it is claimed.

In this sense, it will be mentioned that through patent US5422048, "A method of producing a bent resin tube" is known which, however, shows significant differences with the method preconized herein, the most significant being the fact that in the said patent tube heating is a step prior to curving it by means of a die instead of the means applying the heat being incorporated directly integrating the mould, which, in addition, means an advantage because, among other things, it allows a speedier consecution of the shape.

### DESCRIPTION OF THE INVENTION

The method for tube shaping and the equipment to carry out the said method proposed by the invention, is therefore configured as a novelty within its field of application as because of its implementation the above mentioned objectives are satisfactorily reached, its characterizing details being conveniently disclosed in the final claims attached to this specification.

Concretely , what the invention proposes is a new method for shaping tubes of plastic and its derivatives based on the use of ultrasounds to curve the tubes taking profit of the effect the ultrasonic waves produce on the molecules of the plastic materials and that cause high frequency mechanical vibrations in them the energy of which is transformed in heat, making that the material is melted in a fraction of second, which, applied in due measure and time and accompanied by the application of pressure on the material, allows to modify its shape and, if this shape is maintained until the material is newly cooled down, the new shape remains.

For that, the method contemplates the application of ultrasonic waves generated by a small generating device that can even be portable, which are applied to the tube by means of, at least, one sonotrode, conjugating values of frequency and time that will depend in each case of the type of plastic material, the diameter of the tube and the thickness of its walls.

Preferably, the equipment to carry out this method contemplates the existence of two half moulds having the curved shape to be obtained that will be those that will apply the pressure on the tube, at least, one of them incorporating the sonotrode connected to the generator of ultrasounds, so that the tube will remain housed and pressured between the said half moulds during the application of the ultrasound.

This operation being completed, cold air will be applied through one or both ends of the tube for its cooling, being thereafter withdrawn from between the half moulds with the new shape expected.

The method disclosed for tube shaping and the equipment to carry out the said method consist, therefore, in an innovation having characteristics unknown up to date for the purpose to which it is designed, reasons that jointly with its practical utility, provide it with a fundament sufficient to obtain the privilege of exclusivity applied for.

### DESCRIPTION OF THE DRAWINGS

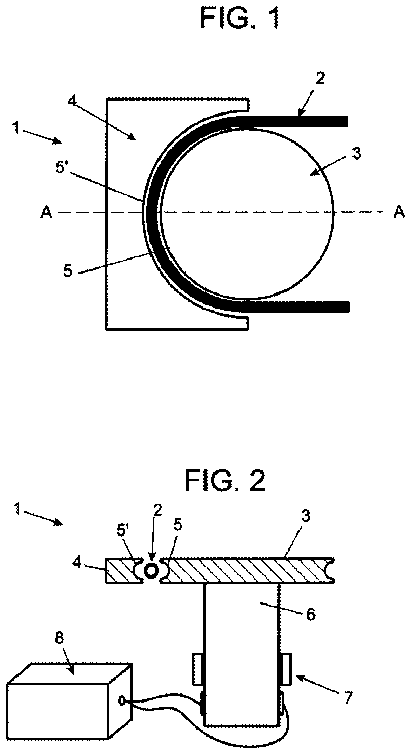

To complement the description being done and in order to assist to best understanding the characteristics of the invention, is attached to this specification, as an integral part thereof, a drawing in which for illustration and not limitation purpose the following has been shown:
Figure number 1.- Its shows an elevation view of a schematic representation of an example of embodiment of the equipment for tube shaping by the method object of the invention, and the main parts and elements thereof can be seen it comprises as well as its configuration and arrangement; and
Figure number 2.- It shows a cross section, according to the section A-A stated in Figure 1, showing the configuration of the half mould incorporating the sonotrode, the device generating the ultrasounds having been represented in this case.

### PREFERRED EMBODIMENT OF THE INVENTION

Considering the disclosed in Figure 1, and in accordance with the numbering chosen, a no limiting example of the equipment of the invention can be seen, which comprises the parts and elements indicated and disclosed in detail below.

Thus, as it can be seen in the said Figure 1, the equipment (1) involved, applicable for shaping tubes (2) of plastic material or its derivatives, and provide them with curved shapes out of a straight length, by applying ultrasounds, is configured from at least, two half moulds (3,4) in which respective curved surfaces (5, 5') complementary to the shapes to be obtained are contemplated, at least one being a first half mould (3) provided with at least one head (6) with at least one sonotrode (7) connected to a device generating ultrasounds (8) and the said sonotrode (7) being arranged so that the vibration caused by the ultrasounds produces heat on the curved surface (5) of the said first half mould (3) to act on the tube (2) sufficiently heating its surface so that it is deformed and takes the curved shape of the curved surfaces (5, 5') between which it is arranged.

Preferably, the equipment (1) contemplates the incorporation of several sonotrodes (7) connected to the generator of ultrasounds (8) through related heads (6) so that they heat the curved surface (5) of the first half mould (3).

Optionally, one or more sonotrodes (7) are also incorporated to the second half mould (4) coupled to heads (6) and connected to the generator of ultrasounds (8) and also arranged so that they can provide heat to the curved surface (5') of this second half mould (4), although this option has not been represented in the figure for simplification purpose.

In addition, different pairs of half moulds (3, 4) can be provided to achieve different curves that can be implemented in the tube (2) and/or in the curved surfaces (5, 5') complementary to the at least two half moulds (3, 4). Obviously, the slope curves and the radii will be different depending on the shape it is wished to achieve.

Anyway, the generator of ultrasounds (8), preferably, is a generator of the portable type, preferably with a power of around 1500W and a frequency of up to 20 HZ, although that will depend on the requirements in each case and, among others conventional elements provided, also preferably, of Ethernet connection with a PC allowing programming and adjusting parameters to be applied and save the applied.

On its hand, the head (6) that is connected to the generator has a transducer, an amplifier and a quick adjustment support to fix the sonotrode (7), elements that have not been detailed in the figure as they are well-known.

With all this, the method for tube shaping of the invention, comprises, same as in other already known systems, placing the length of the tube (2) to be curved pressed between two half moulds (3, 4) with respective curved surfaces (5, 5') complementary to the shape to be achieved; applying heat to fusing the material to soften and deform it until it takers the new shape; and cooling the material after the time of deformation is complete, with the significant difference that the step of applying heat to achieve fusing the material and constituting the most important step of the full process, occurs by applying ultrasonic waves simultaneously to the incorporation of the tube between the half moulds (3, 4), which are applied conjugating, in each case, values of frequency and time according to the type of plastic material, the diameter of the tube (2) and the thickness of its walls.

The nature of this invention being sufficiently disclosed, as well as the way of its implementation, it is not deemed necessary to extend any longer its explanation in order than any person skilled in the art understands its extent and the advantages arising from it, and it is pointed out that, within its essence, it can be implemented in other embodiments different in details from the one indicated for example purpose and to which shall also extend the protection that is sought provided that its fundamental principle is not altered, changed or modified.

## Claims

1. Method for shaping tubes, namely for shaping tubes of plastic material and its derivatives comprising the steps of:
- placing the length of tube (2) to be curved pressed between two half moulds (3, 4) with respective curved surfaces (5, 5') complementary to the shape to be achieved,
- applying heat to fuse the material to soften and deform it until it takes the new shape,
- cooling the material after the deformation time is complete, is **characterized in that** applying heat to fuse the material and soften and deform it until it takes the new shape, occurs based on applying ultrasonic waves simultaneously to the incorporation of the tube between the half moulds (3, 4), conjugating values of frequency and time depending on the type of plastic material, diameter of the tube (2) and thickness of its walls.

2. Method for shaping tubes according to the claim 1, **characterized in that** applying ultrasonic waves is carried out by means of at least a sonotrode (7) that, connected to a generator of ultrasounds (8) heats at least the curved surface (5) of a first half mould (3).

3. Equipment to implement a method for tube shaping as disclosed in the claim 2, **characterized** on that it comprises two half moulds (3,4) in which respective curved surfaces (5, 5') are contemplated complementary to the shape to be achieved, at least one first half mould (3) being provided with at least one head (6) with at least one sonotrode (7) connected to a device generating ultrasounds (8) and the said sonotrode (7) being arranged so that the vibration caused by the ultrasounds produces heat on the curved surface (5) of the said first half mould (3).

4. Equipment according to the claim 3, **characterized in that** it comprises several sonotrodes (7) connected to the generator of ultrasounds (8) through heads (6) that heat the curve (5) of the first half mould (3) in which they are incorporated.

5. Equipment according to the claim 3 or 4, **characterized in that** the second half mould (4) also incorporates one or more sonotrodes (7), coupled to heads (6) and connected to the generator of ultrasounds (8), arranged so that they provide heat to a curved surface (5') of this second half mould (4).

6. Equipment according to any of the claims 3 to 5, **characterized in that** the generator of ultrasounds (8) is a generator of a portable type, preferably with a power of around 1500W and a frequency of up to 20 HZ.
